# EUROPEAN PATENT SPECIFICATION

(11) **EP 0 631 931 B1**
(45) Date of publication and mention of the grant of the patent: **18.02.1998**
(21) Application number: 94914254.1
(22) Date of filing: 04.08.1993
(51) Int. Cl.: B64G 1/14, B64G 1/62, B64C 29/00, B64C 39/00

(54) **SPACECRAFT WITH AN ESCAPE SYSTEM FOR THE CREW**
RAUMFAHRZEUG MIT EINEM RETTUNGSSYSTEM FÜR MANNSCHAFTEN
VEHICULE SPATIAL A SYSTEME D'EVACUATION DE L'EQUIPAGE

(30) Priority: 03.11.1992 RU 9203493
(43) Date of publication of application: 04.01.1995
(73) Proprietor: MESTON, Vyacheslav Alexandrovich, Moscow, 127349 (RU)
(72) Inventor: MESTON, Vyacheslav Alexandrovich, Moscow, 127349 (RU)
(74) Representative: Lins, Edgar, Dipl.-Phys. Dr.jur.
(86) International application number: RU9300184
(87) International publication number: WO9410035

(56) References cited:
- FR-A- 2 634 454
- US-A- 2 684 219
- US-A- 2 981 499
- US-A- 3 054 584
- US-A- 4 343 446
- US-A- 4 650 139
- "Astronautika i Raketodinamika", No. 38, 1990, VINITI, (Moscow), pages 1,13.
- "Astronautika i Raketodinamika", No. 46, 1980, VINITI, (Moscow), pages 1,5.

## Description

### Technical field

The invention relates in general to space engineering and more specifically to reusable spacecraft providing crew escape in case of emergency while in orbital flight.

### Background Art

One state-of-the-art single-stage reusable aerospace vehicle is known to comprise a fuselage incorporating a crew cabin and a payload compartment, a landing gear, a variable-sweep wing, a vertical tail, a power plant, an orbital maneuvering system, and a crew escape system (cf "Novosti zarubezhnoi tekhniki" (Novelties of science and technology abroad) Aerospace and rocket engineering, 1988, No.13 Issued by the Joukovski Central aerodynamic institute, Moscow, p.p..3-4 (in Russian).

One more state-of-the-art single-stage reusable aerospace vehicle is known to comprise a fuselage provided with a crew compartment, a payload compartment, and a center conical body, a landing gear incorporating a multiwheel bogey and a nose wheel, a variable-sweep wing, a power plant, an orbital maneuvering system with final control elements, and a crew escape system with an escape module (cf. the newspaper "Za rubezhom" (News from abroad),Moscow,1986,No.27(1356)pp.12-14(in Russian).

In the aforementioned known single-stage reusable aerospace vehicles the fuselage internal volume is used inadequately efficiently for payload stowage due to accommodation of the power plant in the vehicle fuselage. Said vehicles require a substantially longer runway for taking-off and landing; the vehicle has a low climbing rate because its climbing is effected only due to wing lift. In addition, the heretofore-known constructions of aerospace vehicles are not provided with a crew escape system in case of emergency while in an orbital flight; they are inadequately maneuverable in an orbital flight; their movability over the airfield of a home airdrome is restricted.

One prior-art crew escape system of a single-stage reusable aerospace vehicle, comprising an escape module and an ejection mechanism of said escape module. The escape module is provided with means for crew accommodation, life support, power supply, as well as an alighting gear incorporating an aerodynamic decelerator and a parachute landing system provided with soft landing engines (cf. "Novosti zarubezhnoi tekhniki" (Novelties of science and technology abroad) , Aerospace and rocket engineering, 1988, No.13, Issued by the Joukovski Central Aerohydrodynamic institute,Moscow,pp.12-14 (in Russian).

The aforementioned crew escape system is applicable only in the atmosphere, that is, during orbital injection of the vehicle and its return to the Earth.

### Disclosure of the Invention

It is a primary and essential object of the present invention to provide a spacecraft featuring more efficient utilization of the internal volume of its fuselage, higher climbing rate of the vehicle and better orbital maneuverability , requiring a shorter runway and having increased movability over the airfield of a home airdrome. As far as the crew escape system of the proposed vehicle is concerned , the object of the is to provide crew escape in case of emergency while in an orbital flight.

The foregoing object is accomplished by the spacecraft of claim 1.

As far as the crew escape system is concerned, the foregoing object is accomplished due to the fact that in a crew escape system of a single-stage reusable aerospace vehicle, comprising an escape module and an ejection mechanism of said module, said escape module is provided with means for crew accommodation, life support, power supply, and alighting gear incorporating an aerodynamic decelerator, and a parachute landing system provided with soft landing engines, said escape module is shaped as a capsule communicating with the crew compartment through a tunnel provided with a mechanism for crew transfer from the crew compartment to the capsule, the latter having a heat-protective coating, a retrorocket unit, and a jettisonable cowling, while the aerodynamic decelerator of the capsule is shaped as a number of spring-loaded strips hingejoined to the capsule casing, said strips when in folded position, adjoin the capsule casing and are kept in such a position by the jettisonable cowling and are provided with retainers of their expanded position.

### Brief Description of the Drawings

In what follows the invention is illustrated by the accompanying drawings, wherein:
FIG.1 is a general side view of the spacecraft of the present invention;
FIG.2 is a plan view of FIG.1;
FIG.3 is a front view of FIG.1; and
FIG.4 shows a constructional arrangement of the crew escape system, according to the invention.

### Best Method of Carrying Out the Invention

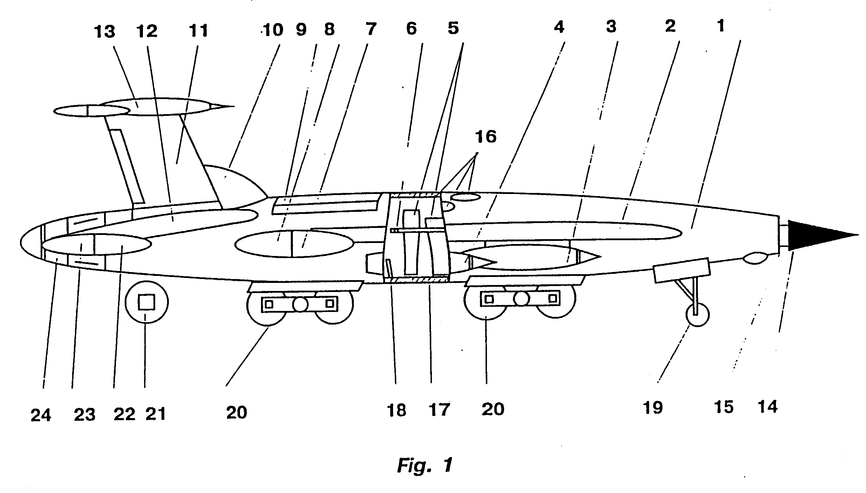

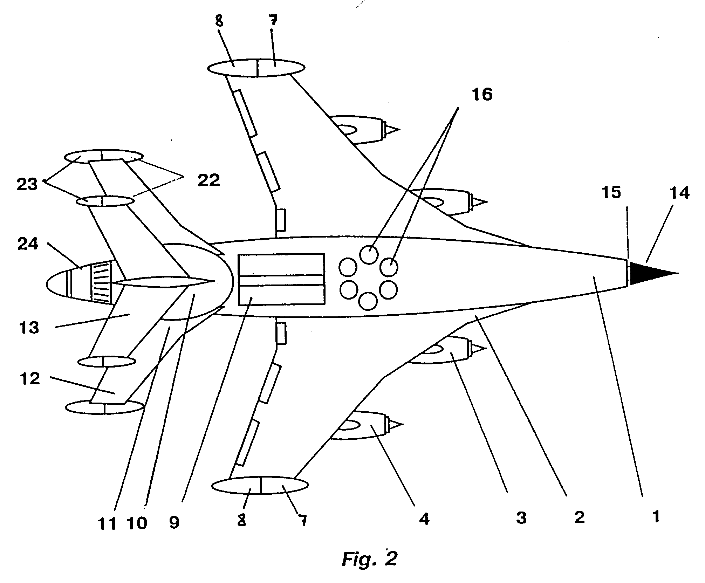

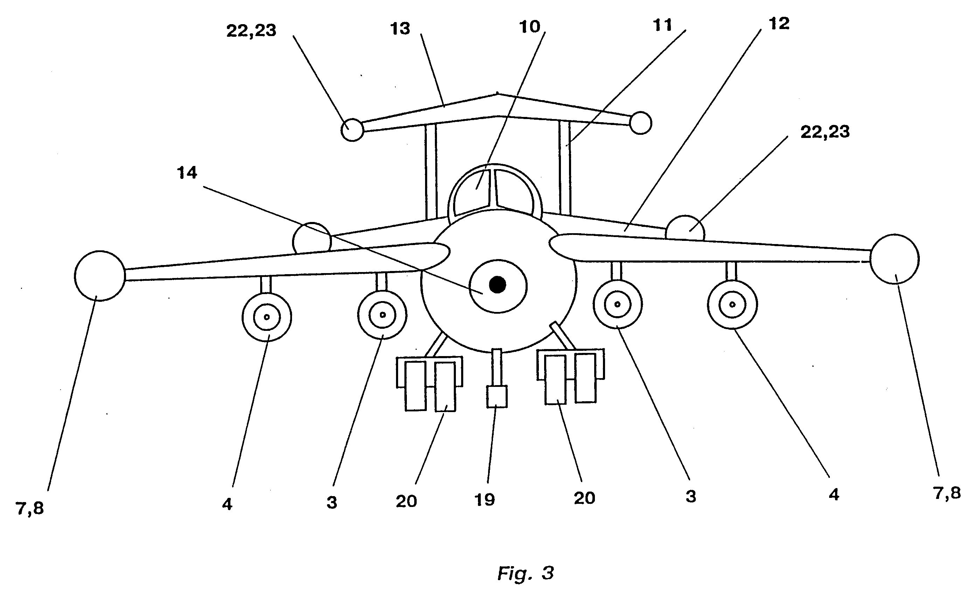

The spacecraft (FIGS.1,2,3) comprises a fuselage 1, a variable-sweep wing 2, a power plant incorporating two liquid-propellant launching rocket engines 3, two liquid--propellant boost rocket engines 4, transverse-thrust rocket engines 5 located in the vehicle fuselage on a rotatable ring 6, solid-propellant emergency deceleration rocket engines 7, solid-propellant additional boosting rocket engines 8, a payload compartment 9, a crew compartment 10 ,a tail unit incorporating two vertical fin struts 11, a bottom tailplanes 12 held to the fuselage 1, and a top tailplane 13 secured at the ends of the fin struts 11 and displaced with respect to the bottom tailplane towards the tail portion of the fuselage 1.

A center conical body 14 is located in the nose portion of the fuselage 1 and is provided with a power actuator 15 for imparting longitudinal motion to said center body.

Production doors 16 are provided in the upper portion of the fuselage 1 for installing the transverse-thrust engines 5, and an opening is made in the lower portion of the fuselage 1 for exhaust gases of the transverse-thrust engines 5 to escape, said opening being provided with sliding shutters 17 and flame deflectors 18.

The spacecraft has a landing gear incorporating a nose wheel 19, a multiwheel bogey 2O and a swiveling tail wheel 21.

The spacecraft comprises an orbital maneuvering system having final control elements in the form of solid-propellant low-thrust rocket engines 22 and 23 mounted at the tips of the tailplanes 12 and 13, respectively, and gyrodynes (not shown) located in the fin struts 11 and at the tips of the panels of the wing 2.

The spacecraft is provided with a crew escape system having an escape module 24 situated at the end of the tail portion of the fuselage 1.

The engines 3 and 4 of the power plant are held to the panels of the wing 2 on pylons.

The emergency deceleration engine 7 and the additional boosting engine 8 are mounted at the tips of the panels of the wing 2.

The crew compartment is situated in the tail portion of the fuselage 1 between the fin struts 11 under the top tailplane 13.

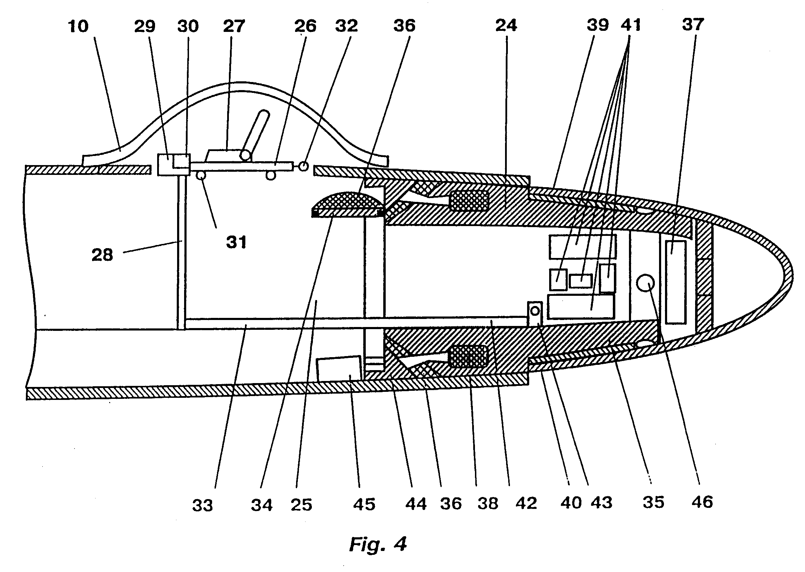

The crew escape system (FIG.4) comprises an escape module 24 shaped as a ballistic recoverable capsule held to the end face of the tail portion of the fuselage 1 of the spacecraft through a releasable locking device (omitted in FIG.4).

The interior of the capsule 24 communicates with the crew compartment 10 through a tunnel 25, wherein a mechanism for crew transferring from the compartment 10 to the capsule 24 is provided.

The aforesaid mechanism comprises a platform 26 on which aircrew seats 27 are mounted, which are provided with folding backs and a seat-folding actuator.

The platform 26 is vertically slidable on an upright 28 provided with a power actuator of the platform 26.

The platform 26 is associated with the power actuator 29 through a pusher-lock 30 and is provided with rolls 31.

The platform 26 is provided with a retainer 32 situated on its side opposite to the pusher-lock 30.

The floor of the tunnel 25 has a guide 33 for the rolls 31 of the platform to ride along.

The ballistic recoverable capsule 24 has hatches in its front and rear portions, respectively.

The front hatch has a door 34, the rear hatch has a door 35.

The door 24 of the rear hatch and the front portion of the capsule 24 are provided with a heat-protective coating 36.

The rear hatch door 35 accommodates a parachute system container 37.

The capsule 24 is provided with retrorockets 38 arranged along the periphery of its front portion.

An aerodynamic decelerator is provided on the outer side of the capsule 24, said decelerator being in fact a number of strips 39 hinge-joined to the casing and spring-forced thereagainst, provided with retainers of their expanded position, said strips being not shown in FIG.4.

When in the initial position the strips 39 are pressed against the casing of the capsule 24 and fixed in position with a cowling 4O that encompasses the capsule casing.

The interior of the capsule 24 accommodates devices and apparatus 41 of the control, life support, and power supply systems.

The inner wall of the capsule 24 is provided with a guide 42 for the rolls 31 of the platform 26 to ride along, said guide being adapted to align with the guide 33 when joining the capsule 24 with the spacecraft.

A receving unit 43 is provided at the end of the guide 42, which comprises a locking device adapted to interact with the retainer 32 of the platform 26, and a platform swivelling mechanism (booth of said device and said mechanism being omitted in FIG.4).

A mechanism for ejection of the capsule 24 is provided in the tail portion of the spacecraft fuselage 1, comprising a ring 44 mounted in the spacecraft fuselage 1 movable along the fore-and-aft axis thereof, and three ejectors 45 adapted to interact with the ring 44.

The capsule 24 has windows 46 made in its rear portion.

In order to increase aerodynamic stability of the capsule during its descent in the dense atmospheric layers and to provide its vertical attitude during landing or alighting on water, the capsule center of mass its displaced towards its front portion.

The required buoyancy of the capsule is ensured by an appropriate unit.

The spacecraft of the present invention functions as follows.

The spacecraft can take off from an airfield runway or vertically.

In the former case the spacecraft starts and lifts off as a conventional aircrfat, using liquid-propellant launching rocket engines 3, climbs out accelerates. At an altitude o the order of 2O km the liquid-propellant boost rocket engines 4 are fired and the spacecraft begins going to the path of orbital injection, while continuing climbing-out apd gaining flight speed of the spacecraft.

At an altitude on the order of 5O km the liquid-propellant transverse-thrust rocket engines 5 are fired to ensure accelerated climbing-up and gaining flight speed, thus curtailing the time of the spacecraft injection into the calculated orbit.

In the latter case the spacecraft starts vertically using the liquid-propellant transverse-thrust rocket engines 5. Once the spacecraft has climbed a safe altitude the launching engines 3 are fired and a horizontal spacecraft acceleration is performed to the speed at which the wing lift starts functioning, whereupon the transverse-thrust engines 5 are shut down.The transverse-thrust engines 5 can also be used ip this case as additional booster engines, for which purpose the axis of the engine 5 is deflected backward from the vertical using the rotatable ring 6, thereby bulging up the longitudinal thrust component.Further flight of the spacecraft proceeds in the same way as in the formed case.

Whenever necessary the solid-propellent additional boosting rocket engines 8 can be fired at any stage of the spacecraft injection into the orbit.

In case of emergency during take-off acceleration on the runway the launching engines 3 are shut down and an emergency spacecraft deceleration is carried out by firing the solid- propellant emergency deceleration rocket engines 7.

Once the spacecraft has been injected into the orbit, and orbital maneuvers aimed at orbital correction, as well as maneuvers for approaching to and docking with other space objects and for spacecraft attitude control are effected by firing some of the solid-propellant low-thrust rocket engines 22 and 23 and by using the gyrodynes or the transverse-thrust engines 5.

Descent from the orbit upon completion of an orbital flight is carried out as follows.

At the initial stage of descent the perigee altitude is reduced to about 70 km, for which purpose a deceleration impulse is imparted to the spacecraft by firing, for a preset time, the solid-propellant emergency deceleration rocket engines 7. As a result, the orbital speed of the spacecraft is reduced to the value on the order of 25M, whereupon the vehicle starts descending.

A relatively large spacecraft wing area enables vehicle descending at small atmospheric re-entry angles, whereby a considerable aerodynamic skin heating can be avoided.

The aforesaid purpose is also attained by the use of the center conical body 14 which makes it possible to shift forward the leading-edge shock wave developed during flight at hyper-sonic speeds, thereby transferring principal thermal load directly to the center conical body 14.

Thermal load relief of the spacecraft airframe is ensured by the fact that its wing 2 is a variable-sweep one.

To reduce the intensity and effective time of thermal load upon the spacecraft airframe members, the transverse-thrust engines 5 are fired as soon as the spacecraft starts descending from ap altitude of about 7O km and the thrust vector is deflected forward,with the aid of the rotatable ring 6, in the direction of descent, whereby rapid cancelling of both the spacecraft ground speed and vertical velocity.

Once the spacearaft speed has been reduced to about 5-6 M the transverse-thrust engines are shut down and the spacecraft continues flying to the landing area under glide conditions.

The spacecraft is enabled to perform runway landing in a conventional way, with subsequent decelartion using the emergency deceleration engines 7 and aerodynamic wing surfaces, as well as vertical landing using the transverse-thrust engines 5. In this case the engines 5 are fired before approaching to the landing area,the spacecraft horizontal speed is cancelled completely using the emergency deceleration engines 7 and by forward deflection of the thrust vector of the engine 5 in the direction of flight, whereupon the spacecraft is descended by a smooth reduction of the thrust of the engine 5 to land at a preselected area. Maneuvering during spacecraft take-off and landing for its taxiing to the runway and returning to the airfield parking area is effected with the use of the swivelling tail wheel 21.

The crew escape system of the spacecraft functions as follows.

A command for actuation of the crew escape system is delivered either automatically or manually if ap emergency situation is detected during spacecraft injection into the orbit or during an orbital flight, against the results of an automatic status monitoring of the spacecraft systems or checking by the spacecraft crew.

In response to the aforesaid command the seats 27 together with the crew members thereon are changed over to the horizontal position with respect to the floor of the compartment 10.

Concurrently the door 34 of the front hatch of the capsule 24 is opened.

The power actuator 29 is turned on, and the platform 26 together with the crew members thereon is lowered to the floor of the tunnel 25 so that the rolls 31 catch the guides 33.

Next the pusher-look 30 operates to release the platform 26 and to move along the guides 33 and 42 to the capsule 24.

The retainer 32 of the platform 26 gets in the locking device of the receiving unit 43 of the capsule 24 and is held in position therein.

The door 34 of the front hatch is closed, after which the locking device associating the capsule 24 with the spacecraft fuselage 1 operates to release the capsule 24. This is followed by operation of the ejectors 45 of the capcule ejection meahanism which actuate the capsule 24 through the ring 44 to separate the capsule 24 from the spacecraft.

Thereafter the systems of the capsule 24 operate independently .

The capsule control system delivers a command for jettisoning the cowling 4O, whereupon the retrorockets 38 are fired to impart a deceleration impulse to the capsule 24 for a predetermined period of time, whereby the capsule 24 is deorbited and goes to a ballistic descent trajectory.

Just after the completion of operation of the retrorockets 38 the mechanism for swiveling the platform 26 is turned on to set the latter square with the fore-and-aft axis of the capsule 24.

Once the cowler 40 has been jettisoned the strips 39 of the aerodynamic decelerator are released and the decelerator is thus unfolded.

Then the strips 39 are opened and fixed in the open position.

It is in such a position, i.e., with the front portion first that the capsule 24 enters the dense atmospheric layers.

The capsule 24 is decelerated largely due to interaction of its front portion provided with the heat-protective coating 36, with the atmosphere and due to the action of the aerodynamic decelerator which at the same time provides for a stabilized position of the capsule 24 during descent.

At an altitude of 8 - 10 km the door of the hatch of the parachute system container 37 is jettisoned and the parachute system is developed, which ensures descent of the capsule 24 and its soft landing. After landing the crew of spacecraft open the door 35 of the rear hatch of the capsule 24 to get out of it.

The crew escape system functions in a similar way in case of emergency during spacecraft injection into the orbit.

### Industrial Applicability

The present invention will find application for transporting useful loads from the Earth to space orbit objects and backwards, as well as for interorbital transportation and long- distance space trips.

## Claims

1. A spacecraft provided with a crew escape system and being essentially a single-stage aerospace vehicle, comprising a fuselage (1) provided with a crew compartment (10), a payload compartment (9) and a conical body (14) located in the nose fuselage portion and centered around the longitudinal axis of said fuselage, a landing gear, incorporating a multiwheel bogey (20) and a nose wheel, a variable-sweep wing (2), a power plant, an orbital maneuvering system provided with final control elements, a crew escape system provided with an escape module (24), CHARACTERIZED in that the power plant comprises two launching rocket engines (3) and two boost rocket engines (4) mounted pairwise on the outer wing panels symmetrically with respect to the vehicle fore-and-aft axis in the form of the longitudinal axis, two solid-propellant additional boosting rocket engines (8), and two solid-propellant emergency deceleration rocket engines (7), each of said solid-propellant additional boosting rocket engines (8) and said solid-propellant emergency deceleration rocket engines (7) being arranged pairwise in a common casing with their respective nozzles facing in opposite directions, said casings being located at the tips of the outer panels of the wing (2), six liquid-propellant transverse-thrust rocket engines (5) located in the vehicle fuselage (1) on a rotatable ring (6) and spaced equidistantly along the ring periphery, providing thrust in a direction transversal with respect to said longitudinal axis, the center of the ring coinciding with the center of mass of the vehicle; production doors (16) are provided in the upper portion of the vehicle fuselage (1) for installing the transverse-thrust engines (5), and an opening is made in the lower portion of the fuselage for the exhaust gases of the transverse-thrust engines (5) to escape, said opening being provided with extensible sliding shutters (17) and flame deflectors (18); the vehicle has a tail unit consisting of two spaced-apart fin struts (11), and a horizontal tail consisting of two parallel tailplanes, a top (13) and a bottom (12) ones, the bottom tailplane (12) is a variable-sweep one and is held to the vehicle fuselage (1), while the top tailplane (13) is displaced with respect to the bottom tailplane (12) towards the tail portion of the fuselage (1) and is held to the ends of the fin struts (11); the crew compartment (10) is interposed between the fin struts (11) under the top tailplane (13), the final control elements of the orbital maneuvering system are low-thrust rocket engines (22, 23) located at the tips of the tailplanes (12, 13), the center conical body (14) is mounted movable along the vehicle fore-and-aft axis and has a power actuator (15); and the escape module (24) of the crew escape system is located on the end face of the tail portion of the vehicle fuselage (1).

2. A spacecraft according to Claim 1, CHARACTERIZED in that the launching engines (3) and the boost engines (4) of the power plant are in fact liquid-propellant rocket engines.

3. A spacecraft according to Claim 1 and 2, CHARACTERIZED in that the low-thrust engines (22, 23) of the orbital maneuvering system are in fact solid-propellant rocket engines.

4. A spacecraft according to Claim 1, 2, 3, CHARACTERIZED in that its tapping gear has a swivelling tail wheel (21).

5. A spacecraft according to Claim 1 having a crew escape system, comprising an escape module (24) and an ejection mechanism of the escape module (24) which is provided with means (41) for crew accommodation, life support, power supply, and alighting gear incorporating an aerodynamic decelerator and a parachute system (37) provided with soft landing engines, CHARACTERIZED in that the escape module (24) comprises a recoverable ballistic capsule communicating with the crew compartment (10) through a tunnel (25) provided with a mechanism (26) for crew transfer from the compartment (10) to the capsule (24) which is provided with a heat-protective coating (36), a retrorocket unit, and a jettisonable cowling (40).

6. A spacecraft according to Claim 5, CHARACTERIZED in that the aerodynamic decelerator of the capsule (24) comprises a number of spring-loaded strips (39) hinge-joined to the casing of the capsule (24) and adjoining the latter when in folded position, being kept in said position by the jettisonable cowling (40), the strips (39) being provided with retainers of their expanded position.

## Patentansprüche

1. Raumschiff mit einem Mannschafts-Rettungssystem, das im wesentlichen ein einstufiges Raumfahrzeug ist, mit einem Rumpf (1) mit einem Mannschafts-Abteil (10), einem Nutzlast-Abteil (9) und einem konischen Rundkörper (14), der im Bereich des Bugs des Rumpfes angeordnet ist und mittig zur Längsachse des Rumpfes ausgerichtet ist, einem Fahrwerk, mit einem mehrrädrigen Träger (20) und einem Bugrad, mit einem Flügel (2) mit veränderlicher Pfeilung, einem Triebwerk, einem orbitalen Manöversystem mit finalen Kontrollelementen, und einem Mannschafts-Rettungssystem mit einem Rettungsmodul (24), **dadurch gekennzeichnet, daß** das Triebwerk (2) zwei Startraketen-Triebwerke (3) und zwei Nachbrenner-Raketentriebwerke (4) aufweist, die paarweise auf den äußeren Flügelflächen angeordnet sind, symmetrisch in bezug auf die Fahrzeug-Vorder- und Hinterachse in Form der Längsachse, zwei zusätzliche Feststoff-Verstärker-Raketentriebwerke (8) und zwei zusätzliche Feststoff-Notfall-Bremsraketentriebwerke (7), wobei jedes der Feststoff-Verstärker-Raketentriebwerke (8) und der Feststoff-Notfall-Bremsraketentriebwerke (7) paarweise in einem gemeinsamen Gehäuse angeordnet ist, wobei die jeweiligen Düsen in einander gegenüberliegenden Richtungen angeordnet sind, und die Gehäuse an den Spitzen der äußeren Flächen der Flügel (2) angeordnet sind, sechs Querschub-Flüssig-Raketentriebwerke (5), die im Rumpf (1) auf einem drehbaren Ring (6) gleichmäßig beabstandet längs des Ringumfanges angeordnet sind, die Schub in einer Richtung quer zu der genannten Längsachse erzeugen, wobei der Mittelpunkt des Ringes mit dem Schwerpunkt des Fahrzeuges zusammenfällt; wobei Montagetüren (16) im oberen Bereich des Rumpfes (1) zum Einbau der Querschub-Triebwerke (5) angeordnet sind, und eine Öffnung im unteren Bereich des Rumpfes zum Entweichen der Abgase der Querschub-Triebwerke (5) vorgesehen ist, wobei die Öffnung mit verschiebbaren Verschlußtüren (17) und Flammenabweisern (18) ausgebildet ist, und das Raumschiff eine Heckeinheit aufweist, die aus zwei voneinander beabstandeten Seitenleitwerken besteht und einem horizontalen Heckbereich mit zwei parallelen Heckflügeln, nämlich einem oberen (13) und einem unteren (12), wobei der untere Heckflügel (12) eine variable Pfeilung aufweist und am Rumpf (1) befestigt ist, während der obere Heckflügel (13) beabstandet zu dem unteren Teilflügel (12) zum Heckbereich des Rumpfes hin angeordnet ist und auf den Enden der beiden Seitenleitwerke (11) angeordnet ist; wobei das Mannschafts-Abteil (10) zwischen den Seitenleitwerken (11) unterhalb des oberen Heckflügels (13) angeordnet ist, während die Kontrollelemente für das orbitale Manöversystem Niedrigschub-Raketentriebwerke (22, 23) sind, die an den Spitzen der Heckflügel (12, 13) angeordnet sind, wobei der mittlere konische Körper (14) beweglich längs der Fahrzeuglängsachse angeordnet ist und einen motorischen Aktuator (15) aufweist, und das Rettungsmodul (24) des Mannschafts-Rettungssystems im Endbereich des Hecks des Rumpfes (1) angeordnet ist.

2. Raumschiff nach Anspruch 1, **dadurch gekennzeichnet, daß** die Startraketen (3) und die Nachbrenner-Raketen (4) des Triebwerkes Flüssig-Raketentriebwerke sind.

3. Raumschiff nach Anspruch 1 oder 2, **dadurch gekennzeichnet, daß** die Niedrigschub-Triebwerke (22, 23) des orbitalen Manöversystems Feststoff-Triebwerke sind.

4. Raumschiff nach einem der Ansprüche 1, 2 oder 3, **dadurch gekennzeichnet, daß** das Fahrwerk ein schwenkbares Heckrad (21) aufweist.

5. Raumschiff nach Anspruch 1, mit einem Mannschafts-Rettungssystem, mit einem Rettungsmodul (24) und einem Auswurfmechanismus für das Rettungsmodul (24), das Mittel (41) zur Aufnahme einer Mannschaft aufweist, zur Unterstützung der Lebensfunktionen, mit einer Energieversorgung und Beleuchtungsmitteln mit einem aerodynamischen Bremssystem und einem Fallschirmsystem (37) mit Vorrichtungen für sanfte Landungen, **dadurch gekennzeichnet, daß** das Rettungsmodul (24) eine wiederbergbare ballistische Kapsel aufweist, die mit dem Mannschafts-Abteil (10) über einen Tunnel (25) in Verbindung steht, der mit einem Mechanismus (26) zum Transportieren der Mannschaft aus dem Mannschafts-Abteil (10) in die Kapsel (24) ausgestattet ist, der eine hitzeabweisende Beschichtung (36) aufweist sowie eine Rückraketeneinheit und eine abwerfbare Haube (40).

6. Raumschiff nach Anspruch 5, **dadurch gekennzeichnet, daß** die aerodynamische Bremsvorrichtung der Kapsel (24) eine Anzahl von federgespannten Streifen (39) aufweist, die beweglich mit dem Gehäuse der Kapsel (24) verbunden sind, und in einer gefalteten Stellung an derselben anliegen, und durch die abwerfbare Haube (40) in dieser Stellung gehalten werden, wobei die Streifen (39) mit Haltern für ihre ausgefahrene Stellung versehen sind.

## Revendications

1. Vaisseau spatial muni d'un système d'évacuation de l'équipage et étant essentiellement un véhicule aérospatial à simple étage, comprenant un fuselage (1) muni d'un habitacle (10) pour l'équipage, un compartiment cargo (9) et un corps conique (14) situé dans la partie formant le nez du fuselage et centré autour de l'axe longitudinal du fuselage, un train d'atterrissage, comprenant un bogie multi-roues (20) et une roue de proue, une aile (2) à flèche variable, un groupe motopropulseur, un système de manoeuvre orbitale muni d'éléments de commande finaux, un système d'évacuation de l'équipage muni d'un module d'évacuation (24), caractérisé en ce que le groupe motopropulseur comprend deux moteurs fusée de lancement (3) et deux moteurs fusée de poussée (4) montés par paires sur les panneaux de la partie extérieure des ailes symétriquement par rapport à l'axe allant de l'avant à l'arrière du véhicule formant l'axe longitudinal, deux moteurs fusée de poussée additionnels à propergol solide (8), et deux moteurs fusée de décélération de secours à propergol solide (7), chacun de ces moteurs fusée de poussée additionnelle à propergol solide (8) et moteurs fusée de décélération de secours à propergol solide (7) étant agencés par paires dans un carter commun avec leurs tuyères respectives tournées dans des directions opposées, ces carters étant logés aux pointes des panneaux extérieurs de l'aile (2), six moteurs fusée de poussée transversale à propergol liquide (5) situés dans le fuselage du véhicule (1) sur un anneau rotatif (6) et espacés de façon équidistante le long de la périphérie de l'anneau, assurant de la poussée dans une direction transversale par rapport audit axe longitudinal, le centre de l'anneau coïncidant avec le centre de masse du véhicule; des portes de montage (16) sont prévues dans la partie supérieure du fuselage (1) du véhicule pour installer les moteurs de poussée transversale (5), et une ouverture est faite dans la partie inférieure du fuselage pour permettre aux gaz d'échappement des moteurs de poussée transversale (5) de s'échapper, cette ouverture étant prévue avec des obturateurs coulissants extensibles (17) et des déflecteurs de flammes (18); le véhicule comporte un empennage consistant en deux supports formant plans verticaux (11) espacés, et une queue horizontale consistant en deux plans de queue parallèles, un supérieur (13) et un inférieur (12), le plan de queue inférieur (12) est à flèche variable et se trouve tenu sur le fuselage du véhicule (1) tandis que le plan de queue supérieur (13) est décalé vers la queue du fuselage (11) par rapport au plan de queue inférieur (12) et se trouve tenu sur les extrémités des supports formant plans verticaux (11); l'habitacle (10) est interposé entre les supports formant plans verticaux (11) sous le plan de queue supérieur (13), les éléments de commande finaux du système de manoeuvre orbitale sont des moteurs fusée basse poussée (22, 23) situés aux pointes des plans de queue (12, 13), le corps conique central (14) est monté mobile le long de l'axe allant de l'avant à l'arrière du véhicule et possède un actionneur motorisé (15); et le module d'évacuation (24) du système d'évacuation de l'équipage est situé sur la face terminale de la queue du fuselage du véhicule (1).

2. Vaisseau spatial selon la revendication 1, caractérisé en ce que les moteurs de lancement (3) et les moteurs de poussée (4) du groupe motopropulseur sont en fait des moteurs fusée à propergol liquide.

3. Vaisseau spatial selon la revendication 1 ou 2, caractérisé en ce que les moteurs basse poussée (22, 23) du système de manoeuvre orbitale sont en fait des moteurs fusée à propergol solide.

4. Vaisseau spatial selon la revendication 1, 2 ou 3, caractérisé en ce que son train d'atterrissage possède une roue de queue pivotante (21).

5. Vaisseau spatial selon la revendication 1, possédant un système d'évacuation de l'équipage, comprenant un module d'évacuation (24) et un mécanisme d'éjection du module d'évacuation (24) qui est muni de moyens (41) pour le logement de l'équipage, la survie, la fourniture d'énergie, et le train d'atterrissage comprenant un décélérateur aérodynamique et un système de parachute (37) muni de moteurs d'atterrissage en douceur, caractérisé en ce que le module d'évacuation (24) comprend une capsule balistique récupérable communiquant avec l'habitacle pour l'équipage (10) par un tunnel (25) muni d'un mécanisme (26) pour transférer l'équipage de l'habitacle (10) à la capsule (24), laquelle est munie d'un revêtement de protection thermique (36), d'un ensemble rétrofusée, et d'un carénage largable.

6. Vaisseau spatial selon la revendication 5, caractérisé en ce que le décélérateur aérodynamique de la capsule (24) comprend un certain nombre de bandes chargées par ressort (39) articulées à la coque de la capsule (24) et adjacentes à celle-ci en position pliée, tenues dans cette position par le carénage largable (40), les bandes (39) étant munies d'éléments de retenue dans leur position d'expansion.
